# EUROPEAN PATENT APPLICATION

(11) **EP 3 593 986 A1**
(43) Date of publication of application: **15.01.2020**
(21) Application number: 18745276.8
(22) Date of filing: 30.01.2018
(51) Int. Cl.: B32B 1/00, B29C 44/00, B32B 5/18, B63B 35/44, E04B 1/343, E04C 2/20

(54) **FOAM PANEL AND PREFABRICATED HOUSE**

(30) Priority: 30.01.2017 JP 2017014858
(71) Applicant: Takemoto, Naofumi, Tokyo 105-0011 (JP)
(72) Inventor: Takemoto, Naofumi, Tokyo 105-0011 (JP)
(74) Representative: Maiwald Patent- und Rechtsanwaltsgesellschaft mbH
(86) International application number: PCT/JP2018/003050
(87) International publication number: WO 2018/139675

(57) **Abstract**

A foam panel is provided, that includes a substrate formed of foamed synthetic resin, a fastening portion having a first end embedded in the substrate and a second end exposed, and a polyurea resin layer covering a surface of the substrate. A prefabricated house includes a plurality of foam panels and is formed by coupling the plurality of foam panels.

## Description

### BACKGROUND

### 1. TECHNICAL FIELD

The present invention relates to a foam panel and a prefabricated house.

Conventionally, a foam panel that is a foam formation containing a foam material and obtained by coating the surface of the foam material with polyurea resin has been known. The foam panel is utilized as a prefabricated building material and a floating construction material (for example, refer to Patent Document 1). Additionally, there is known a prefabricated house formed by joining a plurality of foam panels made of expanded polystyrene (for example, please refer to Patent Document 2 and Patent Document 3). There is known a foam panel including a supporting member or a fastener penetrating from the front surface to the rear surface of the foam panel.
[Patent Document 1] Japanese Patent No. 5727089
[Patent Document 2] WO 01/044593
[Patent Document 3] WO 2006/095430

A foam panel is preferably easily fastened to another member or another foam panel.

In a first aspect of the present invention, a foam panel is provided. The foam panel may include a substrate. The substrate may be formed of a foamed synthetic resin. The foam panel may include a fastening portion. First end of the fastening portion may be embedded in the substrate. Second end of the fastening portion may be exposed. The foam panel may include a polyurea resin layer. The polyurea resin layer may cover a surface of the substrate.

The one end of the fastening portion may include the bent portion.

The fastening portion may include a first fastening portion. The first fastening portion may be embedded in one side of the base material. The fastening portion may include a second fastening portion. The second fastening portion may be embedded in the other side of the base material. A plurality of foam panels can be coupled to one another by fastening the first fastening portion of one foam panel and the second fastening portion of the other foam panel in the plurality of foam panels.

A protruding portion may be formed on one side of the base material. The concave portion may be formed on the other side of the base material. The first fastening portion and the second fastening portion may each have one end embedded in the base material. The other end of the first fastening portion may be exposed from one of the protruding portion and the concave portion and the other end of the second fastening portion may be exposed from the other of the protruding portion and the concave portion.

In a second aspect of the present invention, a fabricated house is provided. The fabricated house may include a plurality of foam panels. The fabricated house may be formed by coupling the plurality of foam panels. The foam panel may include the substrate. The substrate may be formed of the foamed synthetic resin. The foam panel may include the fastening portion. First end of the fastening portion may be embedded in the substrate. Second end of the fastening portion may be exposed. The adjacent foam panels may be coupled via the fastening portion. The polyurea resin layer may be provided to the foam panel. The polyurea resin layer may covert the surface of the substrate.

The prefabricated house may have a base portion. The base portion may provide the buoyancy on water.

The base portion may have a void forming portion. The void forming portion may form a void for providing the buoyancy. The base portion may include a base material for base portion of the foamed synthetic resin. The base material for base portion may surround a void engagement void formation portion. The base portion may have a polyurea resin layer for base portion. The polyurea resin layer for base portion may cover at least the surface of the base material for base portion.

The prefabricated house may be a floating structure on water.

The summary clause of the above invention does not necessarily describe all necessary features of the embodiments of the present invention. The present invention may also be a sub-combination of the features described above.

### BRIEF DESCRIPTION OF THE DRAWINGS

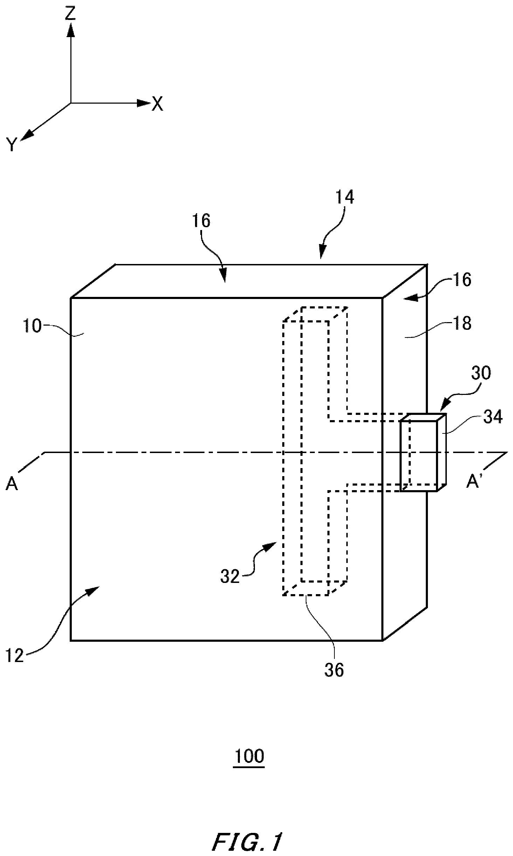

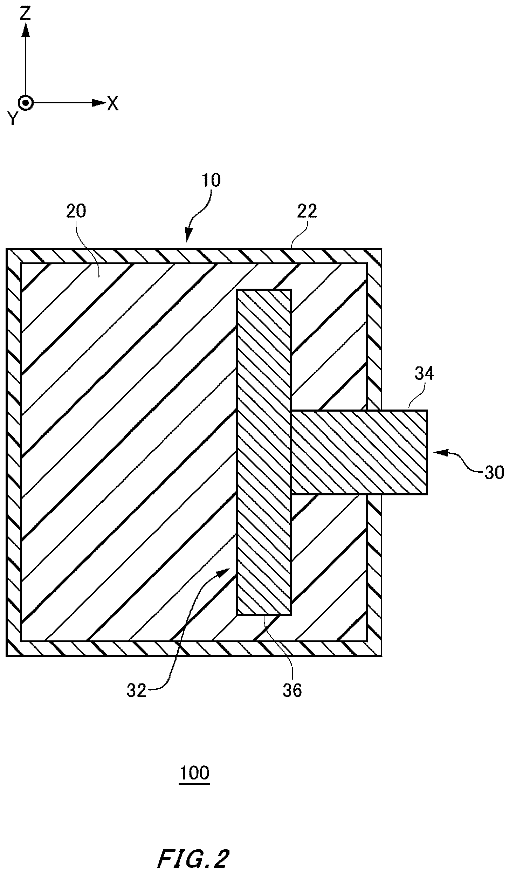

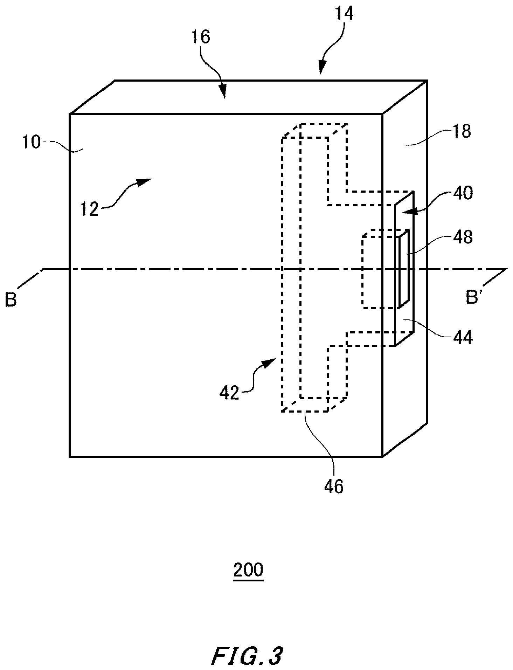

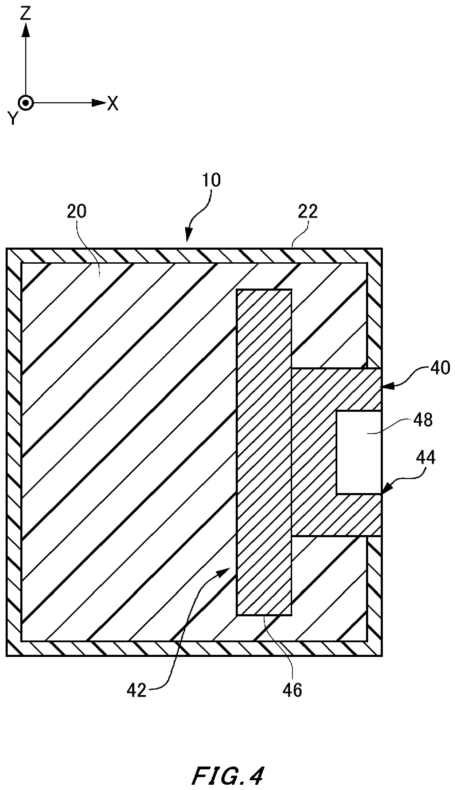

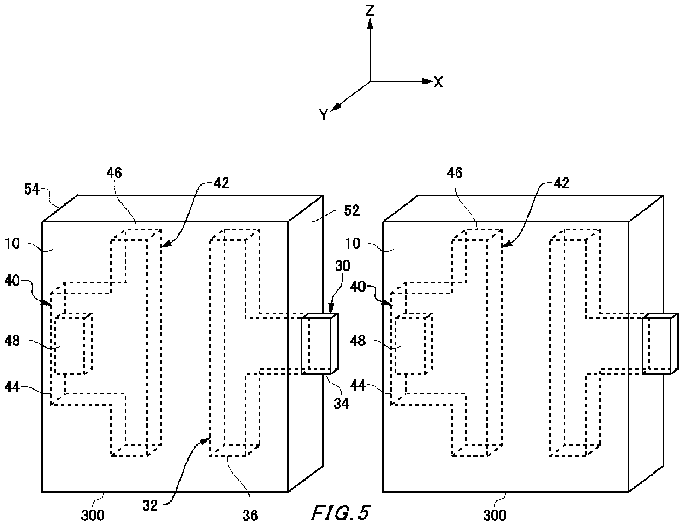

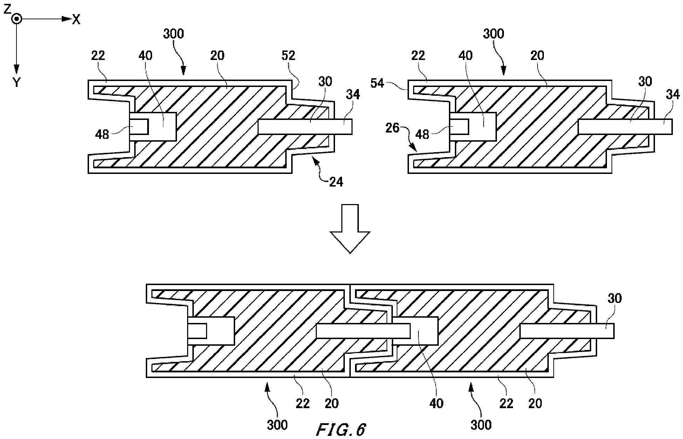

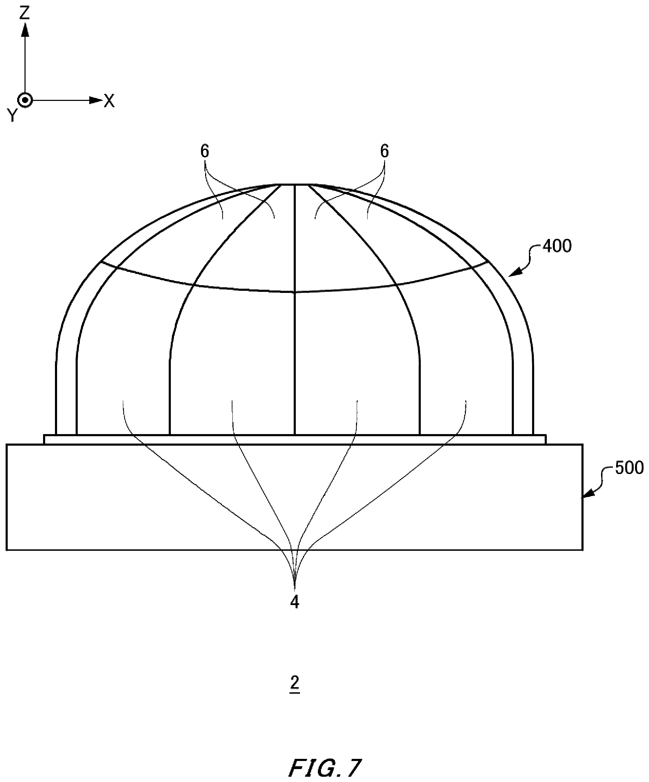

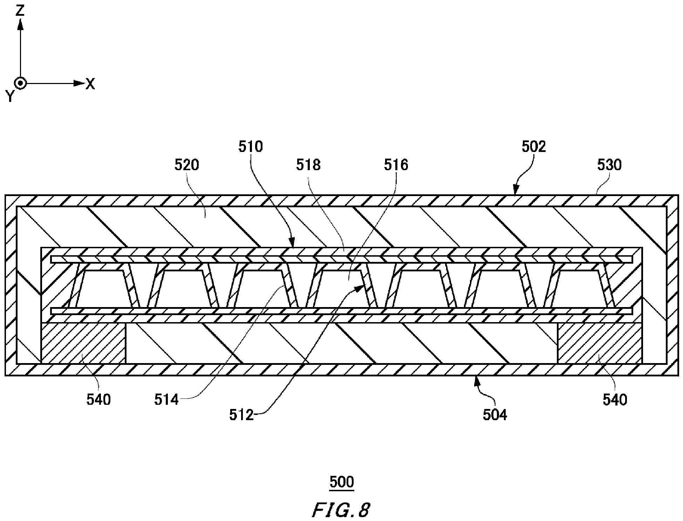

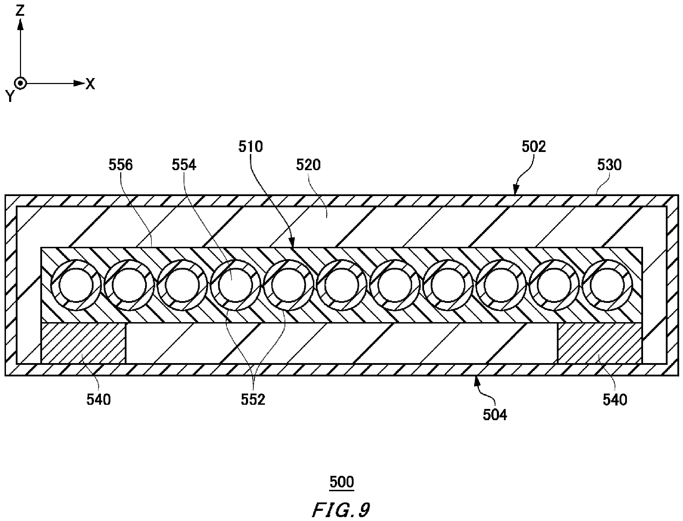

Fig. 1 illustrates a foam panel 100 according to a first embodiment of the present invention. Fig. 2 illustrates a cross section of the foam panel 100. Fig. 3 illustrates another example of a foam panel 200. Fig. 4 illustrates a cross section of an example of another foam panel 200. Fig. 5 illustrates an example of another foam panel 300. Fig. 6 illustrates one example of a foam panel 300 in which a protruding portion 24 and a concave portion 26 are provided to a substrate 20. Fig. 7 illustrates a prefabricated house 2 according to a second embodiment of the present invention. Fig. 8 illustrates a cross section of one example of a base portion 500. Fig. 9 illustrates a cross section of another example of the base portion 500.

### DESCRIPTION OF EXEMPLARY EMBODIMENTS

Hereinafter, the present invention is described through the embodiments of the invention. However, the following embodiments do not limit the invention according to the claims. Also, all the combinations of the features described in the embodiment(s) are not necessarily essential for means provided by aspects of the invention.

Fig. 1 illustrates a foam panel 100 according to a first embodiment of the present invention. The foam panel 100 may be a building material of a prefabricated house, a material for a floating structure on water, a pallet on which an article is placed, a box, a brace, an automobile part, or the like, and the application is not particularly limited. The box may be a container or a cold box. The brace may be a protector.

The foam panel 100 of the present example includes a main body 10 and a fastening portion 30. The main body 10 of the present example has a plate shape. The foam panel 100 includes a front surface 12 and a rear surface 14. In the present example, the front surface 12 and the rear surface 14 each extend along an X-Z plane. Note that, unlike the present example, the front surface 12 and the rear surface 14 may be formed to be a curved surface instead of a flat surface, or may have asperities. Although the front surface 12 and the rear surface 14 are formed to have a rectangular shape, in the present example, a shape is not limited to this. A surface between the front surface 12 and the rear surface 14 is a side surface 16. In the present example, a part of the side surface 16 is a joint surface 18.

The joint surface 18 is joined to another member or another foam panel 100 by contacting with them. The joint surface 18 may be a plane to be abut on another member. The joint surface 18 may be formed in a step-like shape to increase a joint area or may include a fitted shape to be fitted into another member or the like. A concave portion and a protruding portion may be provided to the substrate of the foam panel 100. Thus, the protruding portion of the substrate of the foam panel 100 may be inserted to the concave portion of the substrate of another foam panel 100 to couple the foam panel 100 and another foam panel 100. In this case, the joint area of the joint surface 18 increases and the substrate itself of the foam panel 100 as well as the fastening portion 30 serves for coupling, and thus, the foam panels 100 can be firmly fixed to each other.

The fastening portion 30 may connect the foam panel 100 to another member or may connect the foam panel 100 to another foam panel 100. The fastening portion 30 may be made of metal, reinforced plastic, wood or the like. The fastening portion 30 may be an insertion portion that is inserted into an insertion hole provided to another member or another foam panel 100 for coupling. In this case, the insertion portion may have a stopper mechanism for holding the insertion portion in the insertion hole so as not to fall out of the insertion hole. Additionally, the fastening portion 30 may be a male screw. The fastening mechanism of the fastening portion 30 is not particularly limited, and various fastening mechanisms can be employed.

One end 32 of the fastening portion 30 is embedded in the substrate of the foam panel 100. Second end 34 of the fastening portion 30 is exposed at the joint surface 18 of the foam panel 100. In the present example, the fastening portion 30 extends along the X-axis direction and second end 34 of the fastening portion 30 protrudes from the joint surface 18 of the foam panel 100. In the present example, second end 34 of the fastening portion 30 may be connected to another member or another foam panel 100.

One end 32 of the fastening portion 30 includes a bent portion 36. The bent portion 36 is a portion extending in the direction that intersects with the direction that extends from one end 32 to second end 34 of the fastening portion 30. In the present example, while the fastening portion 30 extends in the X-axis direction from first end 32 to second end 34, the bent portion 36 extends in the Z-axis direction. Therefore, in the present example, the fastening portion 30 is formed to have a T-shape. A dimension of the bent portion 36 in the Z-axis direction is larger than a width in the Z-axis direction of the portion that extends in the X-axis direction from one end 32 to second end of the fastening portion 30. Thus, the bent portion 36 can function as an anchor portion that prevents the fastening portion 30 from slipping off in the X-direction.

Fig. 2 illustrates the cross section of the foam panel 100. Fig. 2 illustrates a cross section of the foam panel 100 taken along a line A-A' of Fig. 1. The foam panel 100 includes a substrate 20, the fastening portion 30, and a polyurea resin layer 22.

The substrate 20 is formed of a foamed synthetic resin. As one example, the synthetic resin forming the substrate 20 is a polymer compound. As a more specific example, the synthetic resin forming the substrate 20 is formed of one or more materials selected from polystyrene, polyethylene, polypropylene, and polyurethane. The foamed synthetic resin refers to the synthetic resin to which fine air bubbles are dispersed. In one example, the substrate 20 is formed of expanded polystyrene (foamed polystyrene).

The polyurea resin layer 22 is a coating layer provided to cover the surface of the substrate 20. The polyurea resin layer 22 is formed of a polyurea resin. The polyurea resin is, for example, a resin including a urea bond formed by a chemical reaction of isocyanate and an amino group. As one example, the polyurea resin is formed by reacting polyisocyanate and polyamine.

The polyurea resin layer 22 may be formed on the entire surface of the substrate 20 except for the portion where the fastening portion 30 is exposed. The polyurea resin layer 22 covers all of the front surface 12, the rear surface 14, and the side surface 16 of the main body 10. The polyurea resin layer 22 can be prevented from peeling off from the side surface 16 by forming the polyurea resin layer 22 on the entire surface of the substrate 20. Depending on the structure of the fastening portion 30, the polyurea resin layer 22 may also be formed on the surface of the fastening portion 30.

The thickness of the polyurea resin layer 22 is smaller than the thickness of the substrate 20. As one example, the thickness T2 of the substrate 20 is 3 cm or more and the thickness T1 of the polyurea resin layer 22 is in the range from 0.5 mm to 5 mm. Particularly, when the foam panel 100 is used as building materials of a prefabricated house or a material for a floating structure on water, it is desirable that the thickness of the substrate 20 is 10 cm or more and 50 cm or less.

The expansion ratio of the foamed synthetic resin forming the substrate 20 may be appropriately set. The expansion ratio of the foamed synthetic resin forming the substrate 20 and the strength of the foamed synthetic resin are inversely proportional. The expansion ratio indicates, for example, the ratio of expansion (in volume) of the synthetic resin particles (raw material beads) before and after being expanded by heating with steam or the like. The expansion ratio of the substrate 20 may be in the range from 10 times to 50 times.

In the foam panel 100 of the present example, the substrate 20 is very lightweight because the substrate 20 is formed of the foamed synthetic resin. Additionally, the polyurea resin layer 22 is high in strength, excellent in water resistant and impact resistance. By having the fastening portion 30, the foam panel 100 is easily fastened to another member or another foam panel 100. In particular, the fastening portion 30 facilitates alignment with another member or with another foam panel 100.

One end 32 of the fastening portion 30 is embedded in the substrate 20 and includes the bent portion 36. The bent portion 36 can prevent the fastening portion 30 from falling out from the foam panel 100. In particular, since the bent portion 36 and the polyurea resin layer 22 on the joint surface 18 are arranged to face each other, by virtue of the bent portion 36 and the polyurea resin layer 22, it is possible to enhance the effect of preventing the fastening portion 30 from falling out.

The foam panel 100 of the present example is superior in workability to a panel made of wood, metal or the like and can be manufactured at low cost. Furthermore, since the foam panel 100 is also superior in a corrosive property compared to the panel made of wood, metal or the like, it is possible to reduce the running cost.

Note that, in the above description, for convenience, although the case where second end 34 of one fastening portion 30 is exposed at one joint surface 18 has been described, second ends 34 of a plurality of fastening portions 30 may be exposed at one joint surface 18. Additionally, although in the above description, the case where first side surface 16 includes the joint surface 18 has been described, a plurality of side surfaces 16 may include the joint surfaces 18. In this case, second end 34 of the fastening portion 30 may be exposed to the plurality of side surfaces 16.

Fig. 3 illustrates an example of another foam panel 200. Fig. 4 illustrates the cross section of another example of foam panel 200. The foam panel 200 of the present example differs from the foam panel 100 illustrated in Fig. 1 and Fig. 2 in the structure of the fastening portion 40. The structures of the substrate 20 and the polyurea resin layer 22 are the same as their structures illustrated in Fig. 1 and Fig. 2. In one example, the polyurea resin layer 22 may be formed on the entire surface of the substrate 20 except for the portion where the fastening portion 40 is exposed. One end 42 of the fastening portion 40 of the present example is embedded in the substrate 20 of the foam panel 200. Second end 44 of the fastening portion 40 is exposed at the joint surface 18 of the foam panel 200.

Second end 44 of the fastening portion 40 of the present example may not protrude from the joint surface 18. An insertion hole 48, into which an insertion portion provided to another member or another foam panel 200 is inserted and fixed, may be formed in the exposed second end 44 of the fastening portion 40. The inner surface of the insertion hole 48 may include a locking mechanism for engaging with and fixing a stopper mechanism of the insertion portion of the inserted member or foam panel.

Additionally, the insertion hole 48 may be a female screw. When the fastening portion 40 has the female screw, it is possible to fix another member or the like with the screw even though the substrate 20 of the foam panel 200 is the foamed synthetic resin. Therefore, the use application of the foam panel 200 is expanded. However, the fastening mechanism of the fastening portion 40 is not particularly limited and various fastening mechanisms can be employed.

In the present example also, one end 42 of the fastening portion 40 may have a bent portion 46. The bent portion 46 is the portion extending in the direction that intersects with the direction extending from one end 42 to second end 44 of the fastening portion 40. In the present example, while the fastening portion 40 extends along the X-axis from first end 42 to second end 44, the bent portion 46 extends in the Z-direction.

In the present example also, by virtue of the fastening portion 40, the foam panel 200 is easily fastened with another member or another foam panel 200. In particular, the fastening portion 40 facilitates the alignment with another member or another foam panel 200. Additionally, one end 42 of the fastening portion 40 is embedded in the substrate 20 and includes the bent portion 46, and thus, it is possible to prevent the fastening portion 40 from falling out from the foam panel 200.

Fig. 5 illustrates an example of another foam panel 300. The foam panel 300 of the present example includes the fastening portion 30 illustrated in Fig. 1 and Fig. 2 and the fastening portion 40 illustrated in Fig. 3 and Fig. 4. The fastening portion 30 functions as a first fastening portion embedded in first side of the substrate 20. On the other hand, the fastening portion 40 functions as a second fastening portion embedded in another side of the substrate 20. The fastening portion 30 and the fastening portion 40 of the present example can be fastened to each other. Structures of Fig. 5 are the same as the structures illustrated in Fig. 1 to Fig. 4 except that the structures of Fig. 5 have a plurality of types of fastening portions 30 and 40. Therefore, the repetitive description is omitted.

A plurality of foam panels 300 can be coupled to one another by fastening the fastening portion 30 of one foam panel 300 and the fastening portion 40 of the other foam panel 300. The foam panel 300 of the present example includes a first joint surface 52 and a second joint surface 54 that are different from each other. In the present example, the first joint surface 52 corresponds to first side of a rectangular panel and the second joint surface 54 corresponds to another side of the rectangular panel. In the present example, the first joint surface 52 and the second joint surface 54 are provided to face with each other. One end 32 of the fastening portion 30 is embedded in the substrate 20 of the foam panel 300. Second end 34 of the fastening portion 30 is exposed at the first joint surface 52 of the foam panel 300. In the present example, second end 34 of the fastening portion 30 protrudes from the first joint surface 52 of the foam panel 300.

One end 42 of the fastening portion 40 is embedded in the substrate 20 of the foam panel 300. Second end 44 of the fastening portion 40 is exposed at the second joint surface 54 of the foam panel 300. Note that, in the present example, although the fastening portion 30 and the fastening portion 40 are separately prepared, the bent portion 36 and the bent portion 46 may be common. In this case, the fastening portion 30 and the fastening portion 40 may be integrally formed inside the foam panel 300.

Since the foam panel 300 of the present example includes the fastening portion 30 and the fastening portion 40, a plurality of foam panels 300 can be coupled one by one. This makes it easy to form a structure by coupling three or more foam panels 300. Since the fastening portion 30 and the fastening portion 40 can be coupled, the plurality of foam panels 300 can be easily aligned. Since the fastening portion 30 and the fastening portion 40 respectively include the bent portion 36 and the bent portion 46, it is possible to firmly fix the foam panels 300 that are coupled with one another.

Note that, in the above description, for convenience, although the case where second ends 34 of one fastening portion 30 is exposed at one first joint surface 52 is described, second end 34 of the plurality of fastening portions 30 may be exposed at one first joint surface 52. Similarly, second ends 44 of a plurality of fastening portion 40 may be exposed at one second joint surface 54. Additionally, second end 34 of the fastening portions 30 may be exposed at the plurality of side surfaces and second end 44 of the fastening portion 40 may be exposed at the plurality of side surfaces.

Specifically, when the outer shape of the foam panel 300 is rectangular; four side surfaces corresponding to four sides of a rectangle may be two sets of the first joint surface 52 and the second joint surface 54. Accordingly, it is possible to configure a structure by joining the plurality of foam panels 300 in a flat or curved plane not only in one direction. Additionally, when the outer shape of the foam panel 300 is a hexagon, six side surfaces corresponding to six sides of the hexagon may be the first joint surface 52 or the second joint surface 54. In this case also, it is possible to configure the structure by joining the plurality of foam panels 300 in a flat or curved plane.

In coupling the plurality of foam panels 300, the first joint surface 52 of one foam panel 300 and the second joint surface 54 of the other foam panel 300 may be bonded with an adhesive in addition to fastening the fastening portion 30 of one foam panel 300 and the fastening portion 40 of the other foam panel 300. Further, a jointing portion between one foam panel 300 and the other foam panel 300 may be coated with the polyurea resin layer.

Additionally, a protruding portion and a concave portion may be provided directly on the substrates 20 of the plurality of foam panels 300. Specifically, the protruding portion may be formed on one of the first joint surface 52 and the second joint surface 54 and the concave portion may be formed on the other. Fig. 6 illustrates one example of the foam panel 300 in which a protruding portion 24 and a concave portion 26 are provided to the substrate 20. Fig. 6 illustrates one example of a cross section of the foam panel 300 that extends along the direction perpendicular to the Z-axis. In Fig. 6, the thickness dimension of the foam panel 300 is exaggerated for clarity of the description. The fastening portion 30 and the fastening portion 40 each have first end embedded in the substrate 20. Second end of the fastening portion 30 may be exposed from one of the protruding portion 24 and the concave portion 26 and second end of the fastening portion 40 may be exposed from the other of the protruding portion 24 and the concave portion 26.

As one example, the protruding portion 24 is formed on the first joint surface 52 and second end 34 of the fastening portion 30 is exposed at any surface of the protruding portion 24. The concave portion 26 is formed at the second joint surface 54 and the insertion hole 48 is exposed at a surface of the concave portion 26. In particular, second end 34 of the fastening portion 30 may be exposed from the tip of the protruding portion 24 of the first joint surface 52 and the insertion hole 48 may be provided at the position corresponding to second end 34 of the fastening portion 30 in the concave portion of the second joint surface 54. The fastening portion 30 and the fastening portion 40 may extend in the protruding direction of the protruding portion 24 (X-direction).

The protruding portion 24 and the concave portion 26 are shaped to fit each other and the protruding portion 24 is inserted into the concave portion 26 formed in the substrate 20 itself for coupling. Therefore, a joint area between the first joint surface 52 and the second joint surface 54 is increased and the substrate 20 itself of the foam panel 300 also contributes to coupling in addition to the fastening portion 30 and the fastening portion 40. As a result, the foam panels 300 can be firmly fixed to each other. In the present example also, the polyurea resin layer 22 may be formed on the entire surface of the substrate 20 except for the portion where the fastening portion 30 and the fastening portion 40 are exposed. Note that the first joint surface 52 and the second joint surface 54 can be formed to have various shapes without being limited to the concave shape and the protruding shape.

For example, the foam panel 300 according to the first embodiment can be manufactured as follows. The same applies to the manufacturing method of the foam panel 100 and the foam panel 200. The fastening portion 30 and the fastening portion 40 having a predetermined shape are prepared. In molding a foam as the substrate 20, the fastening portion 30 and the fastening portion 40 are arranged at the predetermined positions in a molding die. The foam resin is poured into the molding die to surround the fastening portion 30 and the fastening portion 40 for insert-molding.

Then, in an injection stage, a coating material of the polyurea resin is injected over the surface of the substrate 20. At this time, the coating material of the polyurea resin may be injected over the entire surface of the substrate 20 with the fastening portion 30 and the fastening portion 40 being masked such that the coating material of the polyurea resin is not applied thereto. In a drying stage, the polyurea resin is dried. In this manner, a polyurea resin layer 22 is formed on the surface of the substrate 20.

A fiber sheet may be further provided between the substrate 20 and the polyurea resin layer 22 when necessary. The fiber sheet may be a sheet having a carbon fiber or may be a basalt fiber sheet. The fiber sheet may be thinner than the polyurea resin layer 22. The thickness of the fiber sheet may be 1 mm or less or may be 0.6 mm or less. Additionally, when the foam panel 300 is used for the prefabricated house, a sheet selected from a reinforced plastic material, a glass fiber reinforcement plastic, and a glass fiber reinforcement mortar may be provided between the substrate 20 and the polyurea resin layer 22.

Fig. 7 illustrates a prefabricated house 2 according to a second embodiment of the present invention. The prefabricated house 2 includes a dome-shaped house body 400 and a base portion 500. The house body 400 is fixed on the base portion 500. The house body 400 of the present example includes a plurality of lower pieces 4 and a plurality of upper pieces 6. The plurality of lower pieces 4 and the plurality of upper pieces 6 are mutually coupled to form a living space. In the present example, the floor surface shape of the living space is circular, and the outer diameter thereof is in the range from 5 m to 10 m. A door, a window and the like may be attached the lower piece 4 and the upper piece 6.

Each of the plurality of lower pieces 4 and the plurality of upper pieces 6 may be the foam panel 300 described in the first embodiment. That is, the plurality of lower pieces 4 and the plurality of upper pieces 6 may each include the substrate 20 of the foamed synthetic resin and the fastening portion 30 and the fastening portion 40 whose first end 32 (first end 42) is embedded in the substrate 20 and second end 34 (second end 44) is exposed. The plurality of lower pieces 4 and the plurality of upper pieces 6 may be coupled with one another via the fastening portion 30 and the fastening portion 40.

In the present example, the plurality of lower pieces 4 and the plurality of upper pieces 6 are constructed by radially dividing the dome-shaped house body 400 into the plurality of pieces with a center line in the longitudinal direction (Z-direction) of the dome-shaped house body 400 as a center and further dividing the divided pieces into the vertical direction. However, with respect to the prefabricated house 2 of the present embodiment, it is enough if the living space or the accommodation space is formed by joining the plurality of foam panels 300 forming pieces, and the shape of the piece is not limited.

The house body 400 may be formed by joining the plurality of lower pieces 4 along the circumference line, and joining the plurality of upper pieces 6 along the circumference line such that the upper pieces 6 are in contact with the upper ends of the plurality of joined lower pieces 4. The lower pieces 4 adjacent to each other, the upper pieces 6 adjacent to each other, and the lower piece 4 and the upper piece 6 adjacent to each other are joined through the first joint surfaces 52 and the second joint surfaces 54 corresponding to the mutually contacting sides. The pieces adjacent with each other may not only be coupled via the fastening portion 30 and the fastening portion 40, but also may be joined by an adhesive between the first joint surface 52 and the second joint surface 54.

To increase the joint area between the first joint surface 52 and the second joint surface 54, the substrate 20 may be formed such that the surface shape is in a step-like shape. Additionally, the substrate 20 may be formed such that one of the first joint surface 52 and the second joint surface 54 includes the protruding portion and the other includes the grooved portion and the protruding portion may be fitted into the grooved portion. According to these constructions, the plurality of foam panels 300 can be coupled more firmly by affecting fixing by fastening between the fastening portion 30 and the fastening portion 40.

Polyurea resin layers 22 are provided on the surfaces of the plurality of lower pieces 4 and the plurality of upper pieces 6 as in the foam panel 100 illustrated in Fig. 2. Note that, the plurality of lower pieces 4 and the plurality of upper pieces 6 are joined with one another to configure the dome shape, and then, the polyurea resin layers 22 may be formed on the entire outer surface and inner surface of the plurality of lower pieces 4 and the plurality of upper pieces 6.

Even when the plurality of lower pieces 4 and the plurality of upper pieces 6 that are formed with the polyurea resin layer 22 in advance are joined to one another, the polyurea resin may be newly applied to the jointing portion. This enables the joining strength between the plurality of lower pieces 4 and the plurality of upper pieces 6 to be enhanced, and also the airtightness and the waterproofness to be enhanced.

The lower pieces 4 and the upper surface of the base portion 500 can be coupled by various methods. As one example, an annular groove may be formed in the upper surface of the base portion 500 and the end portions of the lower pieces 4 may be inserted to the groove before bonding and fixing the upper surface and the lower pieces 4. However, how to fix the lower pieces 4 to the upper surface of the base portion 500 is not limited to this case.

The base portion 500 of the prefabricated house 2 of the present example provides buoyancy on water. Therefore, the prefabricated house 2 of the present example may be a water-floating structure. For example, the prefabricated house 2 may be a residential facility such as a maritime hotel as well as a marine base.

Fig. 8 illustrates a cross section of one example of the base portion 500. The base portion 500 includes a void forming portion 510, a base portion-substrate 520, and a base portion-polyurea resin layer 530. As illustrated in Fig. 7, the house body 400 is provided on the upper surface 502 of the base portion 500 as described above. Additionally, a posture stabilization weight 540 may be provided on a side closer to the lower surface 504 inside the base portion 500. The thickness of the base portion 500 may be in the range from 30 cm to 100 cm. The void forming portion 510 forms a void for providing buoyancy. The void forming portion 510 is formed of, for example, a polymer compound having a melting point higher than that of the base portion-substrate 520.

The void forming portion 510 of the present example includes a bubble enclosing sheet 512. The bubble enclosing sheet 512 includes first and second sheets that are stacked. The first sheet is shaped to include a plurality of columnar protrusions 514. Air is confined in internal spaces 516 sealed between the columnar shape protrusions 514 of the first sheet and the second sheet. The surface of the bubble enclosing sheet 512 may be coated with the polyurea resin layer 518 for void forming portion. The bubble enclosing sheet 512 is coated with the polyurea resin layer 518 for void forming portion so as to be able to be protected from an external force.

Note that the diameter and the height of the internal space 516 may be 1/4 or more and 1/2 or less of the thickness (thickness in Z-direction) of the base portion 500. According to the present example, since the air is confined within the internal space 516 of such a size, it is possible to obtain the higher positive buoyancy than when the positive buoyancy is obtained by the foamed synthetic resin itself in which fine air bubbles are dispersed in the synthetic resin.

The base portion-substrate 520 surrounds the void forming portion 510. The base portion-substrate 520 is formed of foamed synthetic resin. As one example, the synthetic resin forming the base portion-substrate 520 is a polymer compound. As a more specific example, the synthetic resin forming the base portion-substrate 520 is formed of one or more materials selected from polystyrene, polyethylene, polypropylene, and polyurethane. In one example, the base portion-substrate 520 is formed of expanded polystyrene (foamed polystyrene). The base portion-polyurea resin layer 530 covers at least the surface of the base portion-substrate 520. The base portion-polyurea resin layer 530 is formed of polyurea resin.

The posture stabilization weight 540 may be sealed in the base portion-substrate 520. The posture stabilization weight 540 may be formed of metal. The posture stabilization weight 540 stabilizes the posture of the prefabricated house 2 floating on water. The posture stabilization weight 540 may be attached to a position closer to the lower surface 504 inside the base portion 500. Accordingly, a lower portion including the lower surface 504 of the base portion 500 sinks into the water, and thus, the posture of the prefabricated house 2 is stabilized. By sealing the posture stabilization weight 540 in the base portion-substrate 520, a separate construction for attaching the posture stabilization weight 540 is not necessary. However, unlike the present example, the posture stabilization weight 540 may be attached outside of the base portion 500.

Fig. 9 illustrates a cross section of another example of the base portion 500. The base portion 500 of the present example is different from that illustrated in Fig. 8 in the structure of the void forming portion 510. Structures of the base portion-substrate 520, the base portion-polyurea resin layer 530, and the posture stabilization weight 540 other than the void forming portion 510 are the same as structures illustrated in Fig. 8.

The void forming portion 510 of the present example includes a plurality of air bags 552 instead of the bubble enclosing sheet 512. Air is confined within internal spaces 554 of the air bags 552. The air bags 552 are formed of a polymer compound having the melting point higher than that of the base portion-substrate 520. For example, the air bags 552 are formed of durable rubber. The plurality of air bags 552 may be densely arranged. The surfaces of the plurality of air bags 552 may be coated with the polyurea resin layer for void forming portion 556.

The air bag 552 may have a spherical shell shape or any other shape. The diameter of the air bag 552 may be in the range from 1/4 to 1/2 of the thickness of the base portion 500 (thickness in Z-direction). In the present example also, since the positive buoyancy is provided by the air bag 552, it is possible to obtain the higher positive buoyancy than the positive buoyancy obtained by the foamed synthetic resin itself in which the fine air bubbles are dispersed in the synthetic resin.

In the examples illustrated in Fig. 8 and Fig. 9, the void forming portion 510 is formed in the entire region of the base portion 500 that extends in the XY plane. However, the void forming portion 510 is not limited to this case. In one example, a through hole that extends from the upper surface 502 to the lower surface 504 of the base portion 500 may be formed in the partial region of the base portion 500 and the through hole may be sealed with transparent reinforced glass or reinforced plastic. In this case, when the prefabricated house 2 is floated on the sea, a user can observe the sea through the through hole of the base portion 500 below the floor.

The base portion 500 illustrated in Fig. 8 and Fig. 9 can be manufactured, for example, as follows. First, a void forming portion 510 is formed. In the case of the void forming portion 510 illustrated in Fig. 8, the polymer compound having the melting point higher than that of the base portion-substrate 520 is used as the material, the material is dissolved while stirring, and the material is extruded into two sheets. The two sheets are pressure-bonded while forming the columnar shape protrusion 514 on one of the films by a roller incorporating an air compressor. In this manner, the bubble enclosing sheet 512 is formed. The method of manufacturing the bubble enclosing sheet 512 may be similar to a general method of manufacturing a bubble wrap except for the difference in the size of the columnar shape protrusion 514. Therefore, detailed description is omitted.

The surface of the bubble enclosing sheet 512 may be coated with the polyurea resin layer 518 for void forming portion. However, the polyurea resin layer 518 for void forming portion may be omitted. In the case of the void forming portion 510 illustrated in Fig. 9, the air bags 552 are formed by molding, and the air bags 552 are densely arranged. Then, the surfaces of the bubble enclosing sheet 512 or the plurality of air bags 552 may be coated with the polyurea resin layer for void forming portion 556. However, also in this case, the polyurea resin layer for void forming portion 556 may be omitted.

The void forming portion 510 formed as described above and the separately prepared posture stabilization weight 540 are prepared, and in molding the foam as the base portion-substrate 520, the void forming portion 510 and the posture stabilization weight 540 are arranged at the predetermined position in the molding die. Insert-molding is performed by pouring foam resin into the molding die so as to surround the void forming portion 510 and the posture stabilization weight 540.

Next, at the injection stage, the coating material of the polyurea resin is injected over the surface of the base portion-substrate 520 to form the base portion-polyurea resin layer 530. The posture stabilization weight 540 may also be fixed by the base portion-substrate 520 and the base portion-polyurea resin layer 530. In the drying stage, the polyurea resin is dried. Accordingly, the base portion-polyurea resin layer 530 is formed on the surface of the base portion-substrate 520.

Note that a fiber sheet may be further provided between the base portion-substrate 520 and the base portion-polyurea resin layer 530 when necessary. The fiber sheet may be sheet containing carbon fiber, or may be basalt fiber sheet. The fiber sheet may be thinner than the base portion-polyurea resin layer 530. The thickness of the fiber sheet may be 1 mm or less, or may be 0.6 mm or less. Additionally, sheet selected from reinforced plastic material, glass fiber reinforcement plastic, and glass fiber reinforcement mortar may be provided between the base portion-substrate 520 and the base portion-polyurea resin layer 530.

Although in the above description, as the prefabricated house 2, the marine house including the base portion 500 is used, the present invention is not limited to this case, and the prefabricated house 2 may be a house installed on the ground. Additionally, the prefabricated house 2 is not limited to a prefabricated house forming a living space by coupling a plurality of foam panels, but the prefabricated house 2 may be a floating structure on water that forms an accommodation space for accommodating electronic components by coupling the plurality of foam panels. The floating structure on water may include a marine buoy and drone's maritime base.

While the embodiments of the present invention have been described above, the technical scope of the present invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

### EXPLANATION OF REFERENCES

2: prefabricated house, 4: lower piece, 6: upper piece, 10: main body, 12: front surface, 14: rear surface, 16: side surface, 18: joint surface, 20: substrate, 22: polyurea resin layer, 24: protruding portion, 26: concave portion, 30: fastening portion, 32: first end, 34: second end, 36: bent portion, 40: fastening portion, 42: first end, 44: second end, 46: bent portion, 48: insertion hole, 52: first joint surface, 54: second joint surface, 100: foam panel, 200: foam panel, 300: foam panel, 400: house body, 500: base portion, 502: upper surface, 504: lower surface, 510: void forming portion, 512: bubble enclosing sheet, 514: protrusion, 516: internal space, 518: polyurea resin layer for void forming portion, 520: base portion-substrate, 530: base portion-polyurea resin layer, 540: posture stabilization weight, 552: air bag, 554 internal space, 556: polyurea resin layer for void forming portion

## Claims

1. A foam panel comprising:
a substrate formed of a foamed synthetic resin;
a fastening portion having a first end embedded in the substrate and a second end exposed; and
a polyurea resin layer covering a surface of the substrate.

2. The foam panel according to claim 1, wherein
the first end of the fastening portion includes a bent portion.

3. The foam panel according to claim 1 or 2, wherein
the fastening portion comprises:
a first fastening portion that is embedded in first side of the substrate; and
a second fastening portion that is embedded in second side of the substrate, wherein
in a plurality of foam panels, the plurality of foam panels can be coupled by fastening the first fastening portion of one foam panel and the second fastening portion of another foam panel.

4. The foam panel according to claim 3, wherein
a protruding portion is formed in first side of the substrate and a concave portion is formed in second side of the substrate;
first end of the first fastening portion and first end of the second fastening portion are each embedded in the substrate; and
second end of the first fastening portion is exposed from one of the protruding portion and the concave portion and second end of the second fastening portion is exposed from the other of the protruding portion and the concave portion.

5. A prefabricated house that includes a plurality of foam panels and is formed by coupling the plurality of foam panels, wherein
each of the plurality of foam panels includes a substrate formed of a foamed synthetic resin and a fastening portion having a first end embedded in the substrate and a second end exposed, and the plurality of foam panels are coupled via the fastening portion; and
each of the plurality of foam panels includes a polyurea resin layer that covers a surface of the substrate.

6. The prefabricated house according to claim 5, further comprising:
a base portion that provides a buoyancy on water.

7. The prefabricated house according to claim 6, wherein
the base portion include a void forming portion that forms a void for providing the buoyancy, a base portion-substrate formed of foamed synthetic resin and surrounding the void forming portion, and a base portion-polyurea resin layer that covers at least a surface of the base portion-substrate.

8. The prefabricated house according to claim 5, wherein
the prefabricated house is a water-floating structure.

## Amended claims

### Amended claims under Art. 19.1 PCT

1. A foam panel comprising:
a substrate formed of a foamed synthetic resin;
a fastening portion having a first end embedded in the substrate and a second end exposed; and
a polyurea resin layer covering a surface of the substrate.

2. The foam panel according to claim 1, wherein
the first end of the fastening portion includes a bent portion.

3. The foam panel according to claim 1 or 2, wherein
the fastening portion comprises:
a first fastening portion that is embedded in first side of the substrate; and
a second fastening portion that is embedded in second side of the substrate, wherein
in a plurality of foam panels, the plurality of foam panels can be coupled by fastening the first fastening portion of one foam panel and the second fastening portion of another foam panel.

4. The foam panel according to claim 3, wherein
a protruding portion is formed in first side of the substrate and a concave portion is formed in second side of the substrate;
first end of the first fastening portion and first end of the second fastening portion are each embedded in the substrate; and
second end of the first fastening portion is exposed from one of the protruding portion and the concave portion and second end of the second fastening portion is exposed from the other of the protruding portion and the concave portion.

5. A prefabricated house that includes a plurality of foam panels and is formed by coupling the plurality of foam panels, wherein
each of the plurality of foam panels includes a substrate formed of a foamed synthetic resin and a fastening portion having a first end embedded in the substrate and a second end exposed, and the plurality of foam panels are coupled via the fastening portion; and
each of the plurality of foam panels includes a polyurea resin layer that covers a surface of the substrate.

6. The prefabricated house according to claim 5, further comprising:
a base portion that provides a buoyancy on water.

7. The prefabricated house according to claim 6, wherein
the base portion include a void forming portion that forms a void for providing the buoyancy, a base portion-substrate formed of foamed synthetic resin and surrounding the void forming portion, and a base portion-polyurea resin layer that covers at least a surface of the base portion-substrate.

8. The prefabricated house according to claim 5, wherein
the prefabricated house is a water-floating structure.

9. (added) A water-floating structure comprising:
a base portion that provides a buoyancy on water, wherein
the base portion includes a void forming portion that forms a void for providing the buoyancy, a base portion-substrate formed of a foamed synthetic resin and surrounding the void forming portion, and a base portion-polyurea resin layer that covers at least a surface of the base portion-substrate.

10. (added) The water-floating structure according to claim 9, wherein
the floating structure on water is a house including a house body that is dome-shaped; and
the house body is fixed to the base portion.

11. (added) The water-floating structure according to claim 9, wherein
the floating structure on water is a buoy or a base on the sea.

12. (added) The water-floating structure according to any one of claims 9 to 11, wherein
the void forming portion includes a bubble enclosing sheet in which air is confined in a sealed internal space.

13. (added) The water-floating structure according to any one of claims 9 to 11, wherein
the void forming portion includes a plurality of air bags, each of which includes an internal space within which air is confined.
